# EUROPEAN PATENT APPLICATION

(11) **EP 4 530 602 A1**
(43) Date of publication of application: **02.04.2025**
(21) Application number: 24217549.5
(22) Date of filing: 26.05.2021
(51) Int. Cl.: G01N 1/31, G01N 35/00

(54) **APPARATUS AND METHOD FOR PROCESSING BIOLOGICAL SAMPLES**

(30) Priority: 27.05.2020 US 202063030427 P
(62) Divisional of application: 21728887.7
(71) Applicant: Agilent Technologies, Inc., Santa Clara, CA 95051 (US)
(72) Inventor: JOHANNSEN, Michal, Santa Clara, CA, 95051-7201 (US); MATTHIESEN, Steen Hauge, Santa Clara, CA, 95051-7201 (US); VALBJØRN, Peter, Santa Clara, CA, 95051-7201 (US); LINDBERG, Martin N, Santa Clara, CA, 95051-7201 (US)
(74) Representative: Grünecker Patent- und Rechtsanwälte PartG mbB

(57) **Abstract**

Method and apparatus are provided for processing a sample on a slide. A capillary processing module has a crank to raise and lower a slide, and/or a side inlet to apply a fluid to the slide. A capillary gap is formed between the slide and a chamber floor of the capillary processing module when the crank has lowered the slide. Capillary action causes the fluid to spread through the capillary space across a processing area and to contact the sample. When the crank raises the slide, the fluid is withdrawn from the processing area of the slide because the capillary gap is eliminated.

## Description

### CROSS-REFERENCE TO RELATED APPLICATIONS

None.

### FIELD OF THE INVENTION

The present invention relates to apparatus and methods for processing a biological sample on a slide using a capillary processing module.

### BACKGROUND OF THE INVENTION

Sample processing for analyses in histology, cytology, molecular pathology, biochemistry, immunology, microbiology, and other chemical and biological analyses may involve one or a number of processing steps on the sample. Samples may be placed on slides before performing some or all of the desired processing steps. For example, a sample on a slide may be contacted with one or more reagents to label a component of the sample and/or to undergo a reaction with a component of the sample. A wide variety of processing steps are known in these fields and/or may be developed for a particular analysis to be performed.

Many reagents used in processing biological samples are expensive, difficult to obtain, and/or potentially hazardous, so it is desirable to reduce or minimize the amount of reagent used for processing a sample. For liquid reagents, it is often desirable to maintain the concentration of reagent dissolved in the liquid but reduce the volume of reagent utilized for processing the sample. For a biological sample on a slide, use of a smaller volume of liquid reagent presents challenges, since the smaller volume might not completely cover the sample and therefore lead to inconsistent or inadequate processing of the sample.

One way to increase liquid reagent coverage of a sample is to spread the reagent across the slide by creating a capillary gap between a flat surface of the slide and an opposing surface. A liquid in such a capillary gap will tend to spread and fill the capillary space due to capillary forces, thereby covering the flat surface of the slide and a sample on the slide. However, once a liquid has spread to fill a capillary space, further motion of the liquid within the capillary gap is restricted by capillary forces. Passive mixing and redistribution of a liquid within a capillary gap can be slow or inadequate. If a reagent dissolved in the liquid is consumed by reaction or binding to a sample mounted on the slide, an area of low reagent concentration can form around the sample. Unless the reagent is replenished within this low concentration area by mixing, redistribution, or exchange of the liquid reagent in the space for fresh reagent, consumption of the reagent by the sample will slow and extend the time needed to accomplish the processing. Furthermore, concentration differences between the low concentration area and other areas can lead to inconsistent treatment across the sample and result in undesirable effects such as staining gradients.

Some drawbacks with prior apparatus for processing slides are that they require relatively large volumes of processing liquids, that their performance is inferior to manual processing, and/or that they are relatively complex or require a large number of moving parts. Other drawbacks are that they cannot rapidly heat or cool a slide and/or they allow temperature gradients around the slide.

Larsen et al. US Patent No. 10,018,542 describes a method and an automated apparatus for processing at least one biological sample arranged on a slide. At least one capillary staining module has a slide rack holder configured to detachably hold a slide rack configured to hold slides, and a capillary lid rack holder configured to detachably hold a capillary lid rack configured to hold capillary lids, wherein the slide rack can be removed independently of removing the capillary lid rack. A first fluid chamber has a first fluid. The apparatus is configured to automatically rotate the one or more slides, and to move the lids towards the slides to automatically form a capillary gap between each slide and each capillary lid, said capillary gap functioning as a capillary chamber; and to supply an amount of the first fluid to the slide.

### SUMMARY OF THE INVENTION

As one aspect, the present disclosure provides a method for processing a biological sample on a slide. The method comprises placing a slide in a capillary processing module. The capillary processing module comprises a chamber having a chamber floor and a crank positioned to raise and lower a portion of the slide with respect to the chamber floor. The method also comprises rotating the crank to raise or lower a portion of the slide. A capillary gap is formed between the chamber floor and the slide when the slide is at a lowered position. By way of example, the crank can raise or lower a first end of the slide, while a second end of the slide remains on the chamber floor or on a slide support extending from the chamber floor.

As another aspect, the present disclosure provides a capillary processing module (CPM). The CPM comprises a chamber comprising a chamber floor and one or more chamber sidewalls (for instance, one continuous chamber sidewall or four chamber sidewalls joined by corners). The CPM also comprises a crank positioned to raise and lower a portion of the slide when rotated. The crank can have a bent portion and/or asymmetric portion positioned to engage and disengage the slide when the crank is rotated. A capillary gap is formed between the chamber floor and the slide when the slide is at a lowered position.

The capillary processing module can also comprise a chamber lid for the chamber. The chamber lid is movable between open and closed positions (such as by a chamber hinge connecting the lid and the chamber). The CPM can also comprise a port on the chamber lid, a port plug configured to seal the port, and a plug arm having the port plug at an end, where the plug arm is configured to move the port plug or off, or into and out of the port. The CPM can also include one or more heaters on the chamber and/or on the chamber lid and/or one or more cooling devices (for example, a blower) positioned outside the chamber and below the chamber floor. The CPM can also have one or more temperature sensors on the chamber and/or the chamber lid. The capillary processing module can have a drain in the chamber, and a pump fluidly connected to the drain. The drain can be located at an end of the chamber opposite to the crank. The chamber of the CPM can have first and second recesses separated by its processing area, where the first recess has the shaft of the crank disposed therein, and the second recess has the drain disposed therein.

In some embodiments of the present methods and apparatus, a first end of the slide is raised so that a surface of the slide and the chamber floor form an angle between 0 degrees and 15 degrees, or between 0 and 11 degrees, or between 0 and 2 degrees. A capillary gap between the chamber floor and the slide is formed by rotating the crank to lower the slide. An amount of a first fluid can be supplied to the chamber floor when the slide is in a lowered or raised position, preferably by supplying the fluid at an inlet of the capillary staining module. The first fluid is spread over a processing area of the slide by capillary forces when the slide is in or moving toward a lowered position. The slide can be raised by rotating the crank, and the first fluid is withdrawn from the processing area due to the raising of the slide. The method can comprise repeatedly raising and lowering the slide by rotating the crank in one and/or both directions, so that the first fluid is withdrawn and spread, such as to mix the fluid or prevent local depletion of a reagent. In some embodiments of the present methods and apparatus, the first fluid is removed from the CPM through a drain by raising the slide by rotating the crank, and actuating a mechanism to provide a suction (such as a pump) at the drain. In some embodiment, the first fluid is removed by actuating the mechanism while the slide is in a lowered position, removing substantially all of the fluid from the chamber (except the volume formed by slide supports and the chamber floor), then raising the slide by rotating crank and continuing suction through the drain to remove residual fluid.

These and other features and advantages of the present methods and apparatus will be apparent from the following detailed description, in conjunction with the appended claims.

### BRIEF DESCRIPTION OF THE DRAWINGS

The present teachings are best understood from the following detailed description when read with the accompanying drawing figures. The features are not necessarily drawn to scale.
FIG. 1A to 1D provide a conceptual illustration of an embodiment of a crank for use in the present apparatus and methods.
FIGs. 2A to 2D illustrate another embodiment of the present apparatus and methods.
FIG. 3 provides a perspective view of a CPM embodiment according to the present disclosure.
FIG. 4 shows several different crank designs for use in the present apparatus and methods.
FIGs. 5A, 5B and 5C show another embodiment of the present apparatus and methods in which the crank comprises an asymmetric portion.
FIGs. 6A to 6F illustrate another embodiment of the present apparatus and methods, particularly various elements of a chamber of a CPM.
FIGs. 7A, 7B and 7C illustrate another embodiment of the present apparatus and methods in which the crank comprises an asymmetric portion.
FIG. 8A, 8B and 8C illustrate an embodiment of a CPM comprising a movable plug and a port.
FIGs. 9A to 9C illustrate an embodiment of a CPM comprising a chamber lid attached to a frame to facilitate automated opening and closing of a chamber.
FIG. 10 illustrates an embodiment of a capillary staining module comprising a cooling mechanism.
FIG. 11 illustrates an embodiment of a temperature sensor for a capillary processing module.
FIGs. 12 and 13 illustrate advantageous heater designs for top and bottom surfaces of a capillary processing module.
FIG. 14 is an oblique schematic illustration of an embodiment of an automated staining apparatus comprising a plurality of capillary processing modules.

### DETAILED DESCRIPTION

Before the various embodiments are described, it is to be understood that the teachings of this disclosure are not limited to the particular embodiments described. Unless defined otherwise, all technical and scientific terms used herein have the meaning as commonly understood by those working in the fields to which this disclosure pertain. All patents and publications referred to herein are expressly incorporated by reference.

As used in the specification and the appended claims and in addition to its ordinary meaning, the terms "approximately" and "about" mean to within an acceptable limit or amount to one having ordinary skill in the art. The term "about" generally refers to plus or minus 15% of the indicated number. For example, "about 10" may indicate a range of 8.5 to 11.5. For example, "approximately the same" means that one of ordinary skill in the art considers the items being compared to be the same. In the present disclosure, numeric ranges are inclusive of the numbers defining the range. Each smaller range between any stated value or intervening value in a stated range and any other stated or intervening value in that stated range is also disclosed. Where a stated range includes limits, ranges excluding either or both of those included limits are also included in the present disclosure. Any ranges disclosed herein include all subranges between their endpoints.As used herein, the terms "a," "an," and "the" include both singular and plural referents, unless the context clearly dictates otherwise. Thus, for example, "a fluid" includes one fluid and plural fluids. Unless otherwise indicated, the terms "first", "second", "third", and other ordinal numbers are used herein to distinguish different elements of the present devices and methods, and are not intended to supply a numerical limit. Reference to first and second layers should not be interpreted to mean that the device only has two layers. A device having first and second elements can also include a third, a fourth, a fifth, and so on, unless otherwise indicated.

Generally, it is understood that the drawings and the various elements depicted therein are not drawn to scale. Further, relative terms, such as "above," "below," "top," "bottom," "upper," "lower," "left," "right," "vertical" and "horizontal," are used to describe the various elements' relationships to one another, as may be illustrated in the accompanying drawings. It is understood that these relative terms are intended to encompass different orientations of the apparatus and/or elements in addition to the orientation depicted in the drawings. For example, if a capillary processing module were inverted with respect to the view in the drawings, an element described as "above" another element, for example, would now be "below" that element. Likewise, if the device were rotated 90 degrees with respect to the view in the drawings, an element described as "vertical," for example, would now be "horizontal."

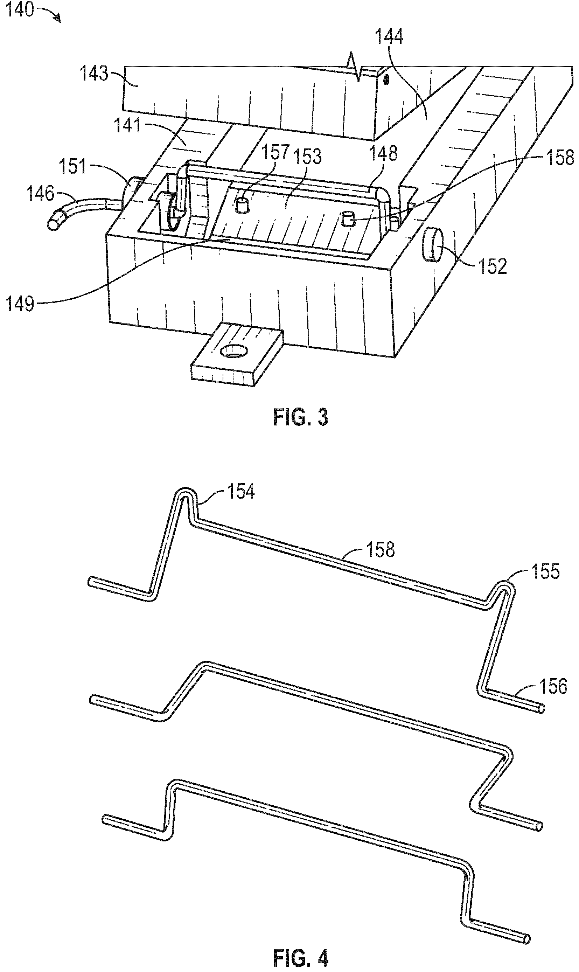

The term "crank" refers to any mechanism or device that converts rotary motion to linear motion and/or vice versa. A crank generally comprises a shaft configured for rotation, and a portion that travels in a wider arc than another portion of the shaft. In some embodiments, the bent portion is bent out at right angles, as illustrated in FIG. 4. The bent portion can be open or it can form a closed loop. The crank may comprise an arm that is rotated or engages an actuator for rotation. The arm may integral with the shaft, or it may be a separate piece attached to the shaft. The crank can be rotated directly or indirectly, such as where the arm is physically contacted and a rotary force is applied, or where a magnetic force causes the shaft to rotate. Rotation of the crank may comprise a full rotation or a partial rotation such as over a limited arc, and includes moving the shaft back and force less than a full rotation, such as by turning about 90° or a larger or small arc. In some embodiments, the shaft has a portion having a cross-sectional shape which is circular, elliptical, oval-shaped, or non-circular. Various shapes can be appropriately selected for use, such as oblong, polygonal, square, rectangular.

In some embodiments, the crank comprises an arm connected to the shaft at an angle, such as at a right angle to facilitate rotation. The shaft can comprise a bent portion or an asymmetric portion, such as an integral, intermediate U-shaped axially offset bend. The shaft can also comprise axially aligned ends.

The crank typically comprises a bearing, and the chamber typically comprises a bearing hole on one or two chamber sidewalls on opposite sides of CPM. The bearing holes can be through-holes or dead-end holes, and a CPM may have one of each. The crank can comprise one or more journals or portions of a shaft specially configured to contact a bearing. The crank can also comprise one more bushings inserted into the chamber hole to provide a bearing surface for the journal. In some embodiments, the crank extends from the one or more chamber sidewalls and does not extend through the chamber floor.

The crank is configured in the CPM so that the shaft's rotation raises and lowers the slide. Because a portion of shaft (such as a bent or asymmetric portion) engages the slide to raise it, the portion may have a coating or surface treatment to reduce friction with the slide. Alternatively, the coating or surface treatment may increase friction or enhance engagement, allowing a biasing force to be applied to the slide by the crank. In some embodiments, the shaft forms a closed loop, which may be rectangular or another shape.

As used herein, a "slide" refers to any sample holder, support or substrate having at least one substantially flat surface for a biological or chemical sample. Thus, the slide can be a carrier, test tube, chip, array, or disk that can support at least one sample. A slide typically has first and second major slide surfaces.

A sample may be disposed on a slide in various ways. In some embodiments, the sample is a biological sample such as a layer or slice of skin, tumor, or other tissue. The tissue or other sample may be preserved in formaldehyde or in an embedding medium such as paraffin. Samples in paraffin or other embedding medium may be subjected to steps like deparaffinization, by which paraffin overlaying and/or infiltrating the sample is removed.

The term "conduit" generally encompasses any structure configured to define a flow path for fluid to travel from one point (for example, an inlet of the conduit) to another point (for example, an outlet of the conduit), though a conduit can deliver fluid to intermediate points as well. A conduit can be flexible, rigid, or both in some measure or portions. For example, a conduit can be a long tube, a short fitting, or a manifold with multiple entrances and/or exits, and can be formed from plastics, metals, silica, and other materials.

The present disclosure refers to a capillary processing module (CPM), which also encompasses a capillary staining module or other module for performing one or more processing steps as described herein. The present methods and apparatus generally make use of a CPM as described herein. The CPM comprises a chamber for receiving a slide and performing one or more processing steps on the slide. The chamber can be any desired shape or size and can be formed from any desired material. In some embodiments, the chamber is substantially rectangular with a longer side and a shorter side. The CPM can also include a chamber inlet through which fluids (such as a liquid comprising reagent) are introduced to the chamber for processing the sample. In some embodiments, the chamber inlet is on the longer side; In some embodiments, the longer slide is about three times longer than the shorter side The chamber can have an open top, and the CPM can comprise a chamber lid that closes the chamber. The chamber can have one or more regions. In some embodiments, a processing area is located in a first region, and a crank is located in a second region.

In some embodiments, the capillary process module is formed from metal, polymer, or composite material. For example, the chamber can be machined in stainless steel, and the processing area can be polished to remove machining tracks and obtain a very smooth surface. In some embodiments, the surface of the chamber or the processing area is then treated for surface hardening (for example, Kolesterised) followed by a electro polish for removing residuals from the treatment. The surface may then be treated to provide corrosion, wear resistance , chemical inertness and anti-stick properties. Preferably, the CPM has a hardness sufficient to resist scratching, as many glass slides have very high hardness and sharp edges and may also resist build up of staining residues on the bottom surface.

In some embodiments, the CPM is made of a stainless steel alloy (such as SMO254) treated by surface hardening, such as Kolsterising, to resist scratching. In some embodiments, a surface of the CPM comprises an inert, corrosion resistant coating, such as a barrier of amorphous silicon, oxygen and carbon. The coating can be selected to provide one or more of corrosion and wear resistance, chemical inertness, and anti-stick properties. For example, in some embodiments, the coating may be an inert corrosion resistant coating such as Dursan. Such coatings can prevent or reduce residue left on the bottom surface of the CPM, such as tissue residues and staining residues. The coating can be applied to the surface of the CPM by any suitable technique, such as by chemical vapor deposition (CVD).

As used herein, automated is defined as a plurality of steps that are executed by substantially mechanical, computer and/or electronic means, though it does not exclude some human intervention steps such as manually replacing one of the described features or steps. As used herein, an automated sample processing apparatus also refers to an automated staining apparatus or other automated apparatus performing one or more steps of sample processing.

In some embodiments, a slide is inserted in an automatic fashion into the CPM for processing and then removed from the CPM after one or more processing steps in the CPM have been performed. The slide insertion and/or removal can be performed by, for example, a slide gripper on a robotic arm, and so the present apparatus and methods can further comprise an automated system for movement of an individual slide. The raising of the slide to an angle (for example, a fixed angle of 11°) by the crank of the CPM allows for automated removal of the slide by the slide gripper without the mechanic tolerances of the slide gripper or robotic arm making the removal of the slide infeasible or impractical.

In some embodiments, the present methods and apparatus are advantageous in their slide handling capabilities. The chamber can be opened to receive a slide and closed after the slide is inserted. The chamber provides space (i.e., the recess) to accommodate a gripper that is holding a slide at its end label as it inserts the slide into the chamber. The CPM also produces agitation to present the slide, and it has features to force the slide to a desired position within the chamber, such as one or more catches in the X, Y, and/or Z directions. By rotating the crank, the slide can be biased in the Y direction toward an end of the chamber. The CPM can have one or more guide pins to bias the slide in the X direction. In some embodiments, camera teach points are included to facilitate automation and machine learning.

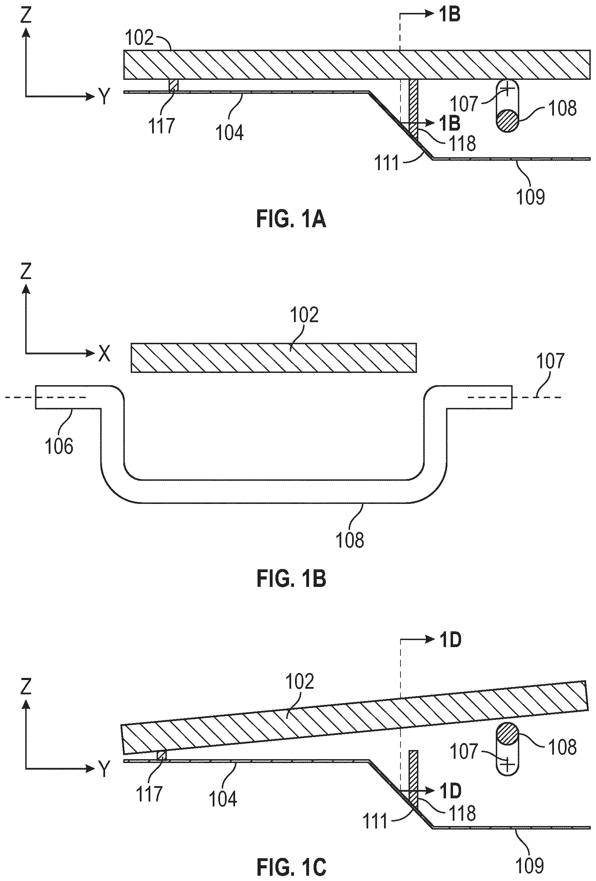

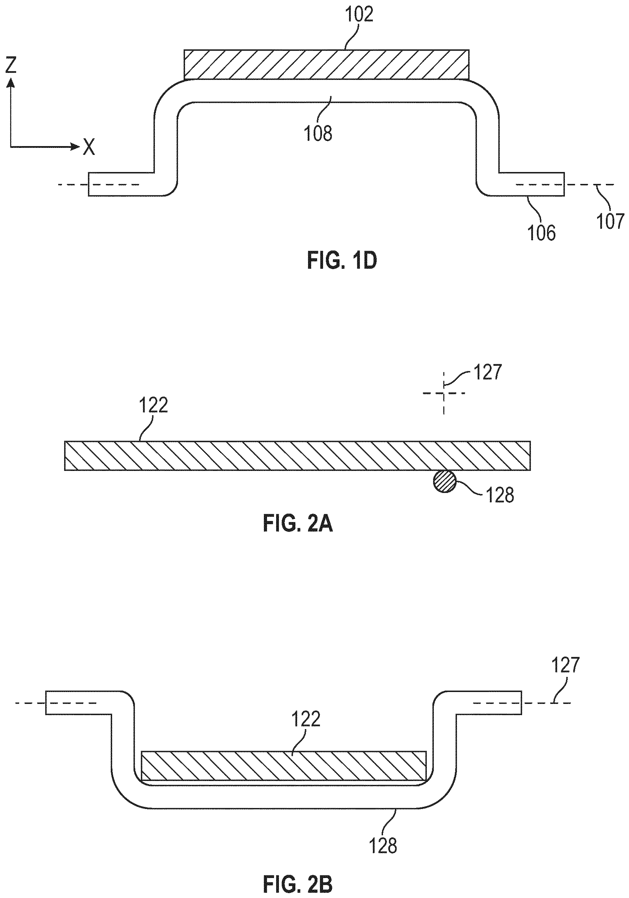

The present apparatus and methods can employ a crank positioned in a CPM to raise and lower a slide or a portion of a slide. The crank can be any design suitable for converting motion from one dimension or direction to another, particularly for converting rotational motion to linear motion. The crank can be configured to convert rotary motion to linear motion in a direction substantially perpendicular to a major surface of a slide. FIG. 1A to 1D provide a conceptual illustration of how a crank can be configured to raise and lower a slide 102. The crank comprises a shaft 106 which is configured to rotate on axis 107 so that bent portion 108 engages or disengages slide 102. FIGs. 1A and 1C provide views from a long edge of slide 102, and FIGs. 1B and 1D are from a short edge of the slide 102. FIGs. 1A and 1B show a slide 102 in a lowered position with respect to a chamber floor 104 of a CPM. In FIGs. 1C and 1D, slide 102 is raised with respect to a chamber floor 104 of a CPM by rotation of shaft 106. Shaft 106 comprises a bent portion 108 which engages slide 102 to raise it. Shaft 106 is configured for rotation around an axis extending horizontally in the plane of the figure. In FIG. 1D, shaft 106 has been rotated about 180° or half a turn, so that bent portion 108 is above chamber floor 104 and engages or raises slide 102. Rotating can also control biasing in x-direction (the long side) by the vertical side walls of the crank. As shown in FIG. 1B, bent portion can be disposed in recess 109 of the CPM into which bent portion 108 can extend below the plane of chamber floor 104 and/or the axis of rotation of shaft 106. Chamber floor 104 is separated from recessed floor 109 by an inclined floor 111.

FIGs. 1A and 1C also illustrate how a capillary gap can be formed and broken between slide 102 and chamber floor 104. In FIG. 1A, a capillary gap is present, having a height defined by the height of slide supports 117 and 118 upon which slide 102 rests when in its lowered position. As used herein, a capillary gap is a distance between two surfaces sufficient to permit capillary action between the surfaces. Capillary action (also referred to as capillary effect or wicking) is the flowing or movement of liquid in narrow spaces due to intermolecular forces between the liquid and solid surfaces. In some embodiments, the CPM is configured to provide a capillary gap from about 0.01 mm to about 0.3 mm, alternatively from about 0.07 mm to about 0.1 mm, between a chamber floor and a slide in a lowered position, and/or to provide a capillary gap volume from about 10 µL to about 300 µL, alternatively from about 80 µL to about 100 µL. The sample attached to the slide is facing downwards and the capillary gap is defined by the slide and the geometry of the CPM. More particularly, the sample is attached to a first major slide surface, and the method comprises inserting the slide into the chamber such that the first major slide surface having the sample faces the chamber floor. The shape of the slide, the geometry of the CPM, material surface properties, slide lifting velocity, angle of slide and properties of the applied or fluid(s) are factors that control the behavior of the fluids applied to the sample in the CPM. In FIG. 1C, the slide 102 is in a raised position, and capillary gap is not present, as it has been broken by operating the crank to raise the slide 102 to increase its distance from the chamber floor 104. Slide 102 does not contact slide support 118, though it may remain in contact with slide support 117, or it may contact chamber floor 104 or another portion of the chamber such as a back wall. The breaking of the capillary gap, while still retaining control of the processing fluid and being able to regenerate the capillary gap are a substantial advantage. Further, the use of the crank to raise and lower a slide after applying a liquid enables mixing of a reagent and small liquid reagent volumes such as 50 to 150 µL can be used without local depletion of the reagent. The slide can be raised to a specific height and/or angle, and at a speed in a controlled fashion, such that mixing of the reagent in the applied fluid and buffer can be performed with small reagent volumes such as 90 µL as well as larger buffer volumes such as 2000 µL. Washing efficiency is increased when mixing can be performed during the staining protocol washing steps.

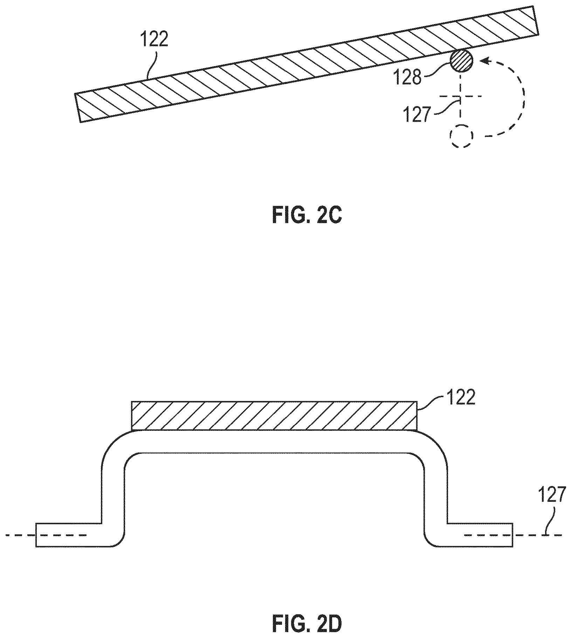

FIGs. 2A to 2D illustrate another embodiment of the present apparatus and methods, where bent portion 128 has a width greater than the width of slide 122 and where rotation axis is above slide 122. In this way, crank is configured to receive or hold slide 122 within its bent portion 128. With this arrangement, the CPM can raise or lower slide 122 over a broader range of angles.

FIG. 3 provides a perspective view of a CPM 140 according to the present disclosure. CPM has a housing 141 and a lid 143, and when lid 143 is in a lowered position, a closed chamber is formed. Shaft 146 extends through a bearing hole into chamber defined by chamber floor 144 of housing 141 and lid 143. Housing 141 has a recess 149 to accommodate bent portion 148 of the crank when it is in a lowered position, in that shaft 146 can be rotated until bent portion 148 is disposed in the recess 149 and does not extend above chamber floor 144. Shaft 146 is supported in bearing holes by bearings 151, 152 which allow rotation. Housing 141 has an inclined floor 153 leading from chamber floor 144 into recess 149.

The use of a crank provides an advantage that is not readily apparent, in that it facilitates the creation of a chamber that is sealed or closed from the ambient environment. The present apparatus avoids the use of a lifting mechanism or a power line that breaches or travels into the CPM chamber from the outside environment. Nor does it require that the power source providing the lifting force is placed inside the CPM chamber or to use magnetic forces to drive the movement. If a mechanism goes through the bottom of the CPM, then it has to be well sealed to avoids leaks and potential damage of the chamber. Further, glass residuals, dirt and liquids may fall into a lifting mechanism on the bottom and potentially cause damage. The present apparatus, with its crank located on a side wall of the chamber, avoids these issues. The present apparatus employs a relatively simple mechanic rotation to control the raising of a slide to a desired height in CPM. Using tangential forces, the slide can be actively moved such that it is biased or unbiased, depending of design and rotation direction. The present apparatus also reduces or avoids demands of high precision in inserting slides to a processing position by a robot, as the crank and wall(s) of the CPM cause the slide to be biased into the desired position for processing.

FIG. 4 shows a different design for use in the present apparatus and methods. The crank comprises two bumps 154, 155 between the shaft 156 and bent portion 158. The bumps 154, 155 are spaced apart at a distance allowing a slide (more specifically, the short side of a slide) to fit between them. This design provides additional control of a slide's movement in an X direction when the crank lifts the slide.

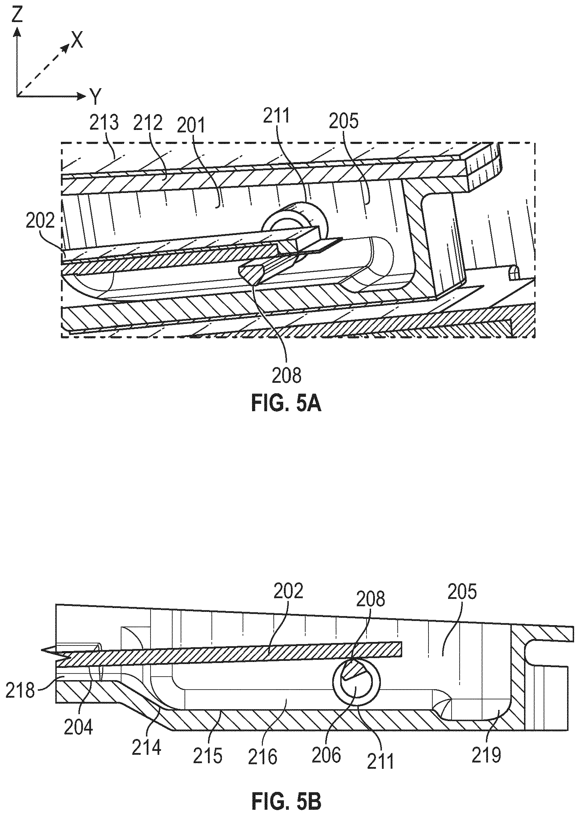

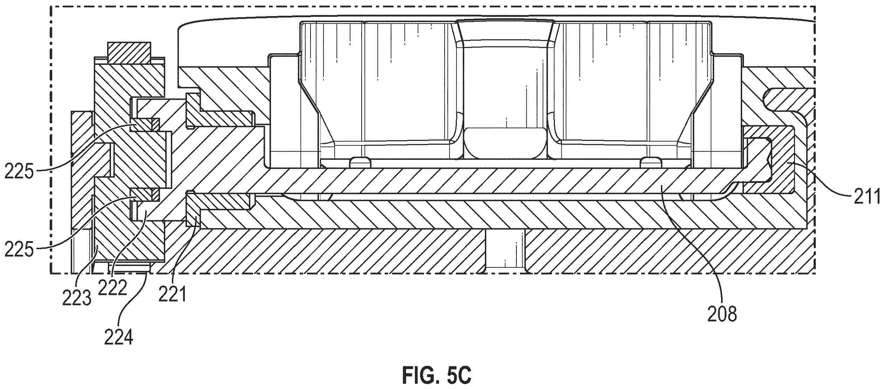

FIGs. 5A, 5B and 5C show another embodiment of the present apparatus and methods. Slide 202 is raised and lowered by a crank in the CPM. The crank comprises an asymmetric portion 208 that engages slide 202. An asymmetric portion 208 can be made by cutting away or omitting a portion of shaft 206. In some embodiments, a shaft has an asymmetric portion that engages the slide, such as an elliptical, oval, or eccentric shaft. Shaft 206 is supported by bearing 211 in a sidewall 205 of a chamber 201. Chamber 201 is closed by a chamber lid 212, forming an isolated space for processing slide 202. Shaft 206 is configured so that, even when slide 202 is raised to its most raised position, slide 202 does not physically contact chamber lid 212. A heater 213 is in thermal contact with chamber lid 212. As shown in FIG. 5A, heater 213 is a plate covering substantially all of the area of a first side of chamber lid 212. Heaters can also be provided on the bottom of the chamber 201. Heater 213 can provide substantially uniform heat to chamber lid 212 and to chamber 201. Chamber 201 has a chamber floor 204, and when shaft 206 and asymmetric portion 208 are rotated so that slide 202 is in a lowered position (as generally illustrated in FIG. 5A), the slide 202 and the chamber floor are separated by a small gap. The gap may be provided by supporting the slide a small distance above the chamber floor 204 by one or more support posts extending from chamber floor 204. Chamber 202 can also comprise an inclined floor 214 extending from chamber floor 204 to a recessed floor 215 in the direction of shaft 206, so that chamber 201 has a recess 216 that can accommodate shaft 206 or a portion thereof. Sidewall 205 joins chamber floor 204 at a curved corner 218 having a curvature. Other surfaces of chamber 201 can also be joined to sidewall 205 at a curved corner 219 which may have a different curvature or other characteristics than corner 218. Curved corners facilitate complete removal of processing fluids from chamber 201. In some embodiments, the CPM can have one or more chamber sidewalls are joined to the chamber floor by a curved corner having a radius of curvature from about 0.5mm to about 5mm.

FIG. 5C shows a cross-section of the crank where an asymmetric portion 208 is between bearings 211, 221. The crank includes a drive end 222 which has on or more features to engage a drive that rotates the crank. The drive end 222 engages gear 223, which can be rotated by a drive chain 224 or other actuating mechanism. Drive end 222 and gear 223 may have reciprocal features or may be fastened in another way. In order to ensure that heat or fluid is not lost from the chamber and that desired humidity levels are maintained, compression springs 225 are positioned between gear 223 and drive end 222 so that a suitable force is applied (for example, about 2.6N), thereby sealing the chamber 201 from a surrounding environment.

The present methods and apparatus are advantageous in providing a defined staining area based on slide position and liquid position within the chamber. The staining area can also be defined in part by a ramp, a slide edge, and/or a label on the slide.

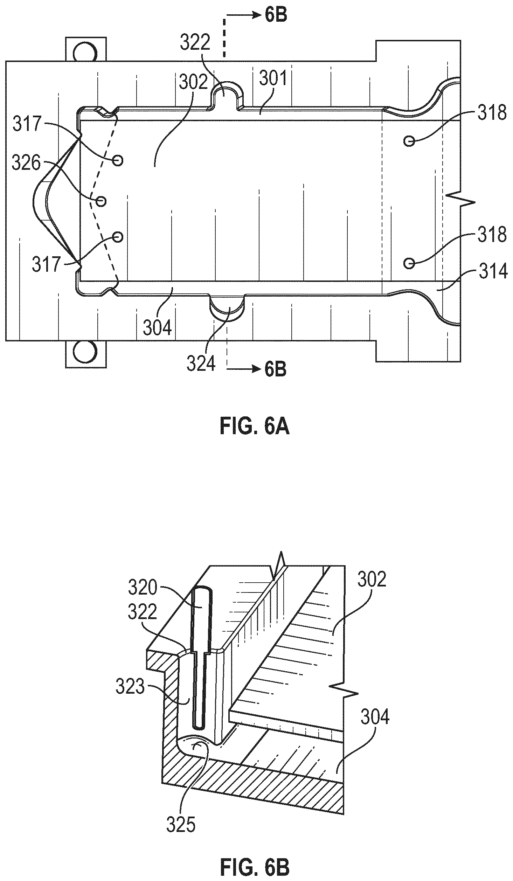

FIGs. 6A to 6F illustrate another embodiment of the present apparatus and methods, particularly various elements of a chamber 301 of a CPM. Slide 302 is positioned in a chamber 301 that comprises a chamber floor 304 and an inclined floor 314. Support posts 317, 318 support slide 302 a short distance above chamber floor 304. Chamber 301 defines a slide space capable of receiving a slide 302. Slide space has an area defined by chamber length L_{C} and chamber width W_{C}. in some embodiments, L_{C} is from about 74 mm to about 106 mm (for example, about 90 mm), and W_{C} is from about 24 mm to about 36 mm (for example, about 30 mm). Chamber 302 can also define a processing area A_{P} defined by processing length L_{P} and processing width W_{P}, which is the area covered by a processing fluid spread by capillary force between slide 302 and chamber floor 304. In some embodiments, L_{P} is from about 42 mm to about 54 mm (for example, about 48 mm), and W_{P} is from about 26 mm to about 32 mm (for example, 29 mm); and/or A_{P} is from about 1000 mm² to about 1800 mm² (for example, about 1400 mm²). Processing width W_{P} is substantially the same as slide width Ws, as the capillary gap is defined by the slide's surface. Processing length L_{P} is defined by length of chamber floor 304, since the capillary gap is broken by inclined floor 314.

The present methods and apparatus also have excellent liquid dispensing capabilities and features, such as by having a port to allow addition of liquid to the chamber without opening the chamber lid. The CPM can have one or more inlets, which are configured to accommodate tip position of a dispenser such as a pipette, including tolerances for the dispenser. The inlets can be configured to prevent liquid from being trapped, and to connect to the capillary gap formed by the slide and the chamber floor. In some embodiments, the inlet has a rounded area and/or has a volume below a slide present in the chamber. In some embodiments, the features for dispensing liquid include one or more apertures on the chamber floor or a chamber side which can be connected to a conduit that delivers liquid from outside, such as a wash buffer. For instance, such apertures can be located in the humidity reservoir area or another area of the chamber floor. The CPM enables faster dispensing of a liquid into a processing area. The CPM is configured to provide a capillary gap between the slide and the chamber floor, more specifically in a planar processing area. For example, the CPM can have 3 knobs extending from the chamber floor (or a different number of knobs), wherein the slide rests on the knobs. The height of the knobs establishes the height of the capillary gap. Other features can be included in the CPM to facilitate the use of capillary forces to distribute fluid in the processing area of the chamber. In some embodiments, pipette teach points are included to facilitate automation and machine learning.

FIG. 6B is a cut-through view along the line indicated in FIG. 6A, and it illustrates how a processing fluid can be dispensed to slide 302, which is in a raised position. Slide 302 can be raised by a crank as described herein or by another mechanism. A fluid dispenser 320 is inserted into chamber inlet 322. In some embodiments, the fluid is dispensed when the slide is in a raised position, or while the slide is being lowered from a raised position. In FIG. 6A, chamber inlet 322 is located along the long side of chamber 301, though it can be located at a short side, in addition to or instead of the long side. Fluid can be dispensed when the slide is in a lowered positions, and fluid will be drained from the inlet by capillary forces during dispensing. If fluid is dispensed when the slide is raised, then the slide is lowered after dispense to spread fluid across processing area. Before or after dispensing a fluid, slide 302 can raised to a height or angle sufficient to avoid or break capillary forces between slide 302 and chamber floor 304. Some fluid from dispenser 320 may stay in inlet 322 but a portion is partially forced out below the slide 302 by dispensing pressure. When slide 302 is lowered, the fluid is subjected to capillary forces which distribute the fluid across the processing area, and fluid moves toward an end of the slide that is not raised by the crank, which may be an end of the chamber comprising a drain 326. As crank gradually lowers slide 302, the fluid is spread toward the end of the slide 302 that was raised and is being lowered. Fluid spreads across chamber floor 304 by capillary forces and substantially stops or refrains from spreading where inclined floor 314 begins, since the gap between slide 302 and inclined floor 314 is sufficiently large to avoid capillary forces.

In some embodiments, fluid is dispensed as a series of droplets, and the fluid may begin spreading across the processing area before all the fluid is dispensed, though a portion of the fluid should remain in the inlet as each subsequent droplet is added.

The rate of dispensing and the rate of spreading in the processing area should be balanced, and dispensing should be done at an appropriate speed or rate. The fluid should not be dispensed so quickly that a portion splashes or flows onto the top surface of the slide. In some embodiments, the rate at which a fluid is dispensed into an inlet is based on a liquid class for the fluid. Examples of dispensing rates for various liquid classes include 0.1mL/s to 1mL/s for liquids having viscosities like water (about 1 centipoise at 20 °C), and as low as 0.01mL/s for liquids having higher viscosities, such as *in situ* hybridization buffers.

In the CPM shown in FIGs. 6A and 6B, first chamber inlet 322 has a substantially flat inlet wall 323 and a substantially flat inlet floor 325. The CPM also comprises a second chamber inlet 324 which has a slanted inlet wall and/or a slanted inlet floor. Inlet 324 is also shown on a long side of the chamber 301, but it can be located at a short side as well, such as the side closest to drain 326. Embodiments of a CPM may have each of these inlet designs or may have two (or more) inlets of the same design. The design of a chamber inlet can be selected based on the timing and amount of fluid that one wishes to draw into capillary gap as a slide is lowered.

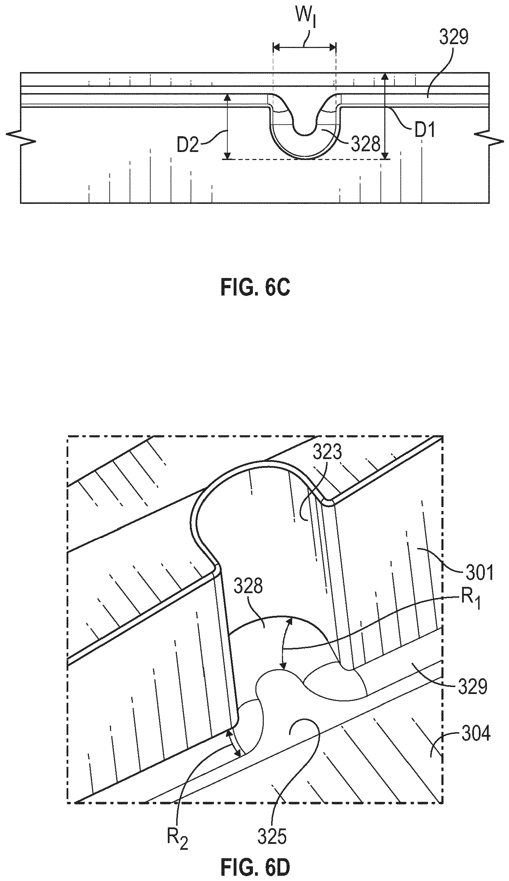

FIGs. 6C and 6D show more detail of chamber inlet 322. The flat design of chamber inlet 322 is configured for forming a major drop of dispensed fluid at the floor of the inlet. The drop is restrained from spreading. Dimension Ø (for instance, 4.5) and inlet width W_{I} (for example, 4.5 mm) are selected to force the fluid out to the capillary surface. Inlet wall 323 is joined to inlet floor 325 by an outward curved corner 328, wherein the curve has a radius R1 (for instance, R1 can be 1.45mm). In some embodiments, R1 is selected to ensure that substantially no fluid remains in the chamber inlet when the fluid is caught by the increasing capillary forces of the lowering slide. D1 (for example, 6.3 mm) is the distance from the far wall to a small slide (such as a slide that is 24.43 mm wide), which corresponds to how far the fluids have to reach. Chamber 301 has a sidewall joined to its chamber floor by an outward curved corner 329 having a radius R2 (for instance, R2 can be 0.8mm). D2 (for example, 4.47 mm) is distance from chamber wall to the slide edge when closest to the inlet. D2 can be selected to secure that dispenser does not touch the slide edge when the slide is closest to the inlet. It will be appreciated that Ø ,W_{I}, R1, D1, R2, and D2 may have dimensions other than the exemplary dimensions set forth above.

A flat design for a chamber inlet on a long side of the chamber 301 may have a number of advantages, including low dependency on whether the slide is biased or not; fluid will not end on top of the slide; since the chamber inlet is flat in the bottom, it is independent of the X, Y and Z tolerance of the dispenser.

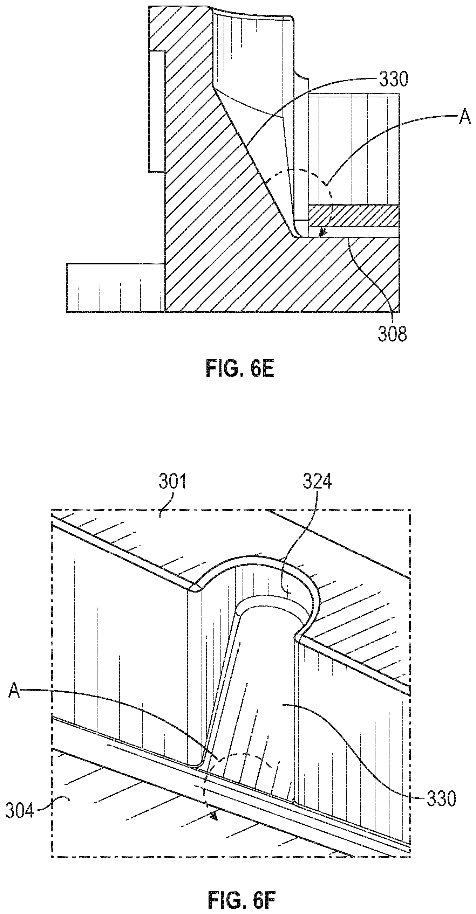

FIGs. 6E and 6F show more detail of chamber inlet 324. The slanted design of chamber inlet 324 is configured for reducing or preventing droplet formation in the inlet. Chamber inlet 324 has a wall 330 that forms an angle A with chamber floor 304 (for example, an angle A between 100° and 150°, or about 120°) that reduces or prevents a significant amount of fluid from sticking to the wall 330.

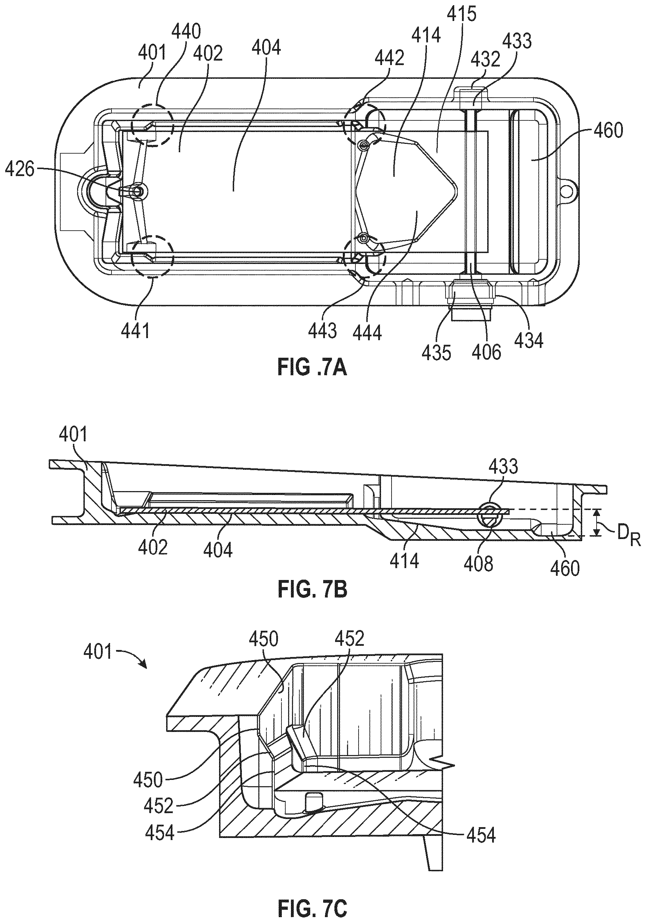

FIGs. 7A, 7B and 7C illustrate another embodiment of the present apparatus and methods. A slide 402 has been placed in a chamber 401. Chamber floor 404 forms a capillary gap with slide 402 when the slide is in its lowered position, and fluid is spread by capillary forces throughout the capillary space. The chamber 401 has an inclined floor 414 between its chamber floor 404 and a recessed floor 415. The fluid does not spread to a substantial extent onto the inclined floor 414 because capillary forces are not present in the larger gap between the inclined floor 414 and the slide 402. The CPM comprises a crank having a shaft 406 and an asymmetric portion 408 which are positioned above the recessed floor 415, below the plane of the chamber floor 404. In FIG. 7B, D_{R} is the height difference between chamber floor 404 and the recessed floor 415. In some embodiments, D_{R} is from about 1.5 mm to about 4.5 mm, or about 3 mm. Chamber 401 has bearing holes 432, 434 on each of the long sides; bearing hole 432 is a dead-ended hole, while bearing hole 434 is a through-hole while permits shaft 406 to contact with an actuating mechanism outside the chamber 401. Shaft 406 is rotatably held by bearings 433, 435.

In some embodiments, the chamber floor of the CPM comprises a tongue 444 which allows the CPM to accommodate a larger volume of fluid with reduce risk of contamination from or damage to the crank while keeping fluid below the slide. The tongue also facilitates draining of fluid through the capillary gap, while preventing liquid from reaching the crank. The tongue prevents leaking of fluid, as a result of capillary action, moving fluid away from sides, rounding at sides, rounding at guide pins X, and the module angle. Exemplary dimensions for the tongue include a tongue area of about 20mm x 20mm. The chamber can also include a humidity reservoir 460, which reduces evaporation from reagents and acts like a vapor sacrifice mechanism. The humidity reservoir 460 can be filled with deionized water (DI) or another liquid by a pipette or dispenser, and it can be emptied by a pipettor, or by heating when chamber is open and between processing of slides, to evaporate residual liquid, or by plumbing such as a tube at the bottom. Periodic emptying is desired to avoid overfilling the reservoir or overflow of residual liquid.

The CPM of FIGs. 7A, 7B and 7C controls position of slide 402 in several ways. In the Y direction, desired positioning of slide 402 is controlled or promoted by operation of the crank. When shaft 406 rotates counter-clockwise (CCW) (from the viewpoint of FIG. 7B), slide 402 is moved or biased toward the far end of the chamber (the end having the drain 426). It is desirable that the slide is biased in the CPM, such that the slide can be brought to a biased position after being inserted and stays in the same position during staining. The biasing enables performance of staining reagent incubation, wash steps and fluid removal without having a non-stained area, cross contamination or non-specific staining of the sample. In the X direction, desired positioning of the slide 402 is controlled or promoted by guides 440, 441 near drain 426, and/or by guides 442, 443 near tongue 444. As illustrated in FIG. 7C, chamber 401 comprises catch 450 for the X direction, glide 452 which allows a slide to glide down gently, and a control 454 which engages slide in the X direction. Exemplary dimensions for catch 450, glide 452, and control 454 include a catch in X of 29mm and is narrowed in to control slide position within 26.5mm. The catch, glide and control features allow a slide to be precisely positioned in a chamber 401 even if it is delivered imprecisely.

In contrast to some previous slide processing devices, the present apparatus do not require a slide carrier to maintain a slide in a desired position, and so no slide carrier is present in some embodiments. Furthermore, some previous slide processing devices required manual insertion of slides in a fixed location or slide carrier that retains the slides like a slide rack. A physical attachment of slides to racks or to a fixation feature may be required. The present apparatus is unique due to that the slide is not physically attached to the chamber or a slide carrier, but controlled movement of the slide can be performed within the chamber and the slide can be easily be removed from the chamber and moved to another location by the apparatus. Since the slide is not physically attached to the CPM, the apparatus can accommodate a large range of slide sizes. Accordingly, in some embodiments of the present apparatus and methods, a slide is not physically attached to a CPM and is not held by a slide carrier or rack. Different sizes of slides are also accommodated because the crank biases the slide when it is inserted in the CPM, pushing it to an end wall of the chamber, thereby predictable and reproducible processing length and processing area for the processing of the slide are obtained.

The present apparatus and methods also allow for individual processing of a slide in a set of slides. Each slide of a set of slides can be inserted into its own CPM, so that it is possible for each slide of the set to be raised or lowered by operation of its own crank, administered its own set of fluid reagents, heated or coded to a desired temperature and/or at a desired rate, or subjected to other individually controlled steps or parameters.

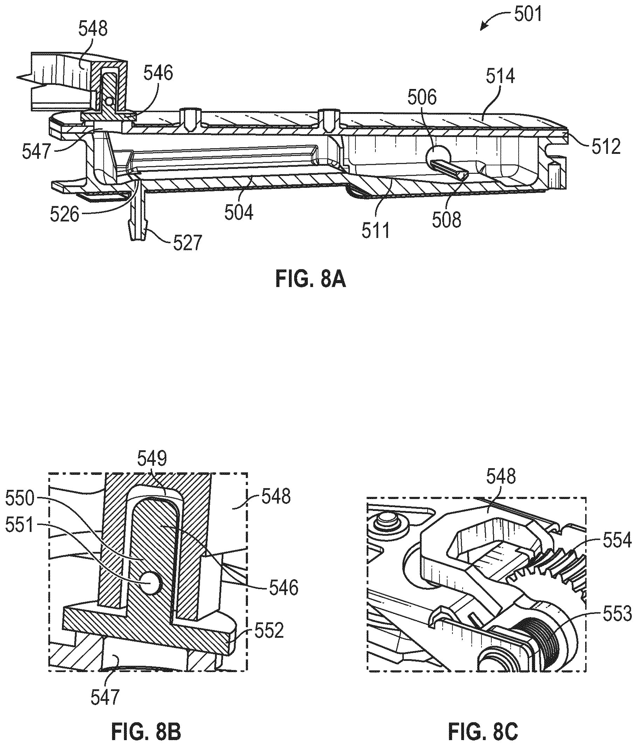

FIGs. 8A and 8B illustrates a CPM that comprises an inlet port and a movable plug to close the port. In FIG. 8A, the CPM comprises a chamber 501 into which a slide can be inserted, and a crank configured to raise and lower the slide with respect to a chamber floor 504. As described above, a capillary gap is formed when a slide is in a lowered position. The crank comprises a shaft 506 and an asymmetric portion 508, and an inclined floor 511 leads to a recess in which they are located. The CPM also comprises a chamber lid 512 which can be opened to allow inserting of a slide 502 into the chamber 501 and closed to form a thermally isolated space within the chamber 501. Chamber lid 512 can be connected to the Chamber 501 by a hinge or other mechanism. The CPM also comprises a heater 514 in the form of a plate, as shown in FIG. 8A, though the heater can be in other forms, such as a wire, or other resistive heating element in contact with the chamber lid 512. The heater 514 can be a conductive heating element (for example a peltier device or similar device), or a heater foil. The CPM can also comprise one or more temperature sensors (such as platinum resistance temperature detectors (RTDs) or thermocouple) that measure the temperature of the chamber lid 512, chamber 501, or other part of the CPM. The measured temperature can be communicated to the temperature controller, which can adjust heating and cooling devices based on the measured temperature. The arrangement of the chamber lid 512 and heater 514 can provide greater control over the temperature within the chamber 501.

In some embodiments, the present apparatus and methods reduce or avoid vertical temperature gradients within the chamber 501. When staining a sample, it is desirable for a CPM chamber floor and chamber lid to be at a substantially same temperature, as this will reduce avoid or reduce a vertical temperature gradient on or around the slide. Since the slide assumes the temperature of the CPM, it is generally sufficient in a processing method to control CPM temperature. In the processing area of the chamber, horizontal temperature gradient can be controlled by bottom heater power distribution and losses to ambient. Accordingly, the present apparatus and methods can have one or more heaters configured to heat a chamber lid and a chamber bottom. Temperature control is maintained by thermal heat transfer provided by electric heater/cooler devices controlled through a temperature controller which controls one or more heater devices and/or one or more cooling devices. Temperature controller can be included within, or in communication with, a CPM controller.

In some embodiments, the CPM comprises a liquid drain positioned so as to facilitate removal of fluids from the chamber. The CPM comprises a drain knob configured to permit capillary forces to center fluid around it. A drain ramp directs fluid toward the ramp. In some embodiments, the angle of the slide relative to the chamber floor is adjusted (such as by rotating the crank), in order to agitate the fluid, which can facilitate removal of the fluid. The staining area can also be angled in its X and/or Y dimensions. For example, the staining area can be angled around its X- axis, such as at an angle between 0.1° and 10°, or about 5°. The chamber comprises a barrier around a front portion or a back portion of the drain, which may be shaped like a horseshoe, to prevent fluid from going past and/or to prevent air from getting in. The slide rests on the horseshoe, and the opening of the horseshoe allows entrance of air when the slide is not angled or raised and the pump is running. This arrangement secures a controlled draining of fluid through the drain. If slide is angled/lifted, most of the opening is closed, thereby increasing the effectiveness and speed of the drain.

In some embodiments, the slide is in a lowered position (not at a tilt), to prevent fluid from being trapped between the edge of the slide and the chamber floor. The CPM prevents liquid traps within the chamber, such as by having rounding at sides; cut down at ramp sides; rounding at corners; rounding at back; and/or two supports at back.

The CPM shown in FIGs. 8A also comprises a drain 526 that allows fluid to be withdrawn from the chamber 501. Fluid can be withdrawn after a desired period of contact with the sample, which can be a predetermined period according to a desired assay or protocol. Fluid can be withdrawn when the slide is in a raised or lowered position, though withdrawal may be facilitated by raising the slide and breaking the capillary gap for a portion of the withdrawal time. In some embodiments, the chamber floor 504 is slightly inclined toward the drain 526 to facilitate movement in that direction. In some embodiments, the drain 526 leads to a nozzle 527 which can be fitted with tubing, and can be fluidly connected to a pump or other drain mechanism to provide suction for removing fluid. Fluid removal through a drain with active suction can be accelerated by raising the slide in a controlled manner to direct the fluid towards the drain. Fluid removal with active suction without angling or lifting the slide provides reduced speed but greater control over drainage, since the liquid front is slowly retracted until only staining area is liquid filled. When another fluid is to be applied, it is beneficial to raise the slide, depending on volume and the fluid properties, such that the fluid can be distributed in the CPM when the slide is lowered after the application. Applying fluid when the slide is raised tends to provide a faster way to spread fluid from the chamber inlet. Then fluid is spread when lowering the slide and the fluid does not have to enter and spread through a narrow capillary gap.

As illustrated in FIGs. 8A and 8B, the CPM also comprises a plug 546 which engages a port 547 on the chamber lid 512 so that chamber 501 can be thermally isolated from the exterior environment. When fluid is to be added to chamber 501, chamber lid plug arm 548 is actuated to move the plug 546 away from the port 547 so that a fluid dispenser can be inserted through port 547. Port 547 is shown near an end of chamber 501 but can be located elsewhere, such as at a side position over with the side chamber inlets shown in FIG. 6A. The moveable plug 546 for the chamber lid 512 enables even greater control over the temperature and humidity within the chamber 501. The plug 546 can be formed from any suitable material, including a rigid material or a flexible material.

FIG. 8B shows a close-up view of the plug 546 engaged with the port 547, including the attachment of the plug 546 to the plug arm 548. The plug 546 has a plug stem 550 extending from plug face 552, and the plug arm 548 has a cavity 549 for receiving stem 550. The stem 550 and plug arm 548 have holes so that a dowel 551 can be inserted to hold the plug 546 to the plug arm 550. The cavity 549 has a larger cross-section than the stem 550, and the hole in the stem 550 is larger than the dowel 551, which allows the plug 546 to rotate slightly within cavity 549. It has been found that such slight rotation around the dowel 551 but constrained by the sides of the cavity 549 provides flexibility in how plug face 551 engages port 547, which facilitates the forming of a seal over the port 547 so that heat and humidity are not lost.

FIG. 8C illustrates plug arm 548 engaging a chamber lid. Plug arm 548 presses the plug against the port with a suitable force, for example, about 1.5N. Such force can be provided by including a spring 553 in the CPM and positioning the spring 553 so that it biases the plug arm 548 to a closed position (more particularly, to a position where the plug is sealing the port). The CPM can also include an actuating mechanism such as a gear 554 which moves plug arm 548 to an open position by turning and overcoming the force applied by the spring 553.

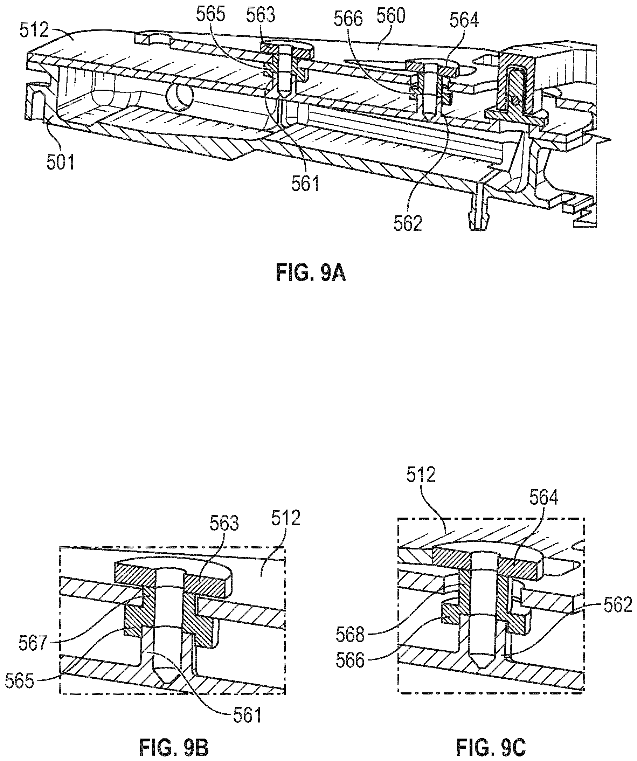

FIGs. 9A to 9C illustrate an approach to attaching a chamber lid 512 to a frame 560 to facilitate automated opening and closing of the chamber. In some embodiments, the chamber lid 512 is flexibly attached to the frame 560 so as to allow slight movement in an X and/or Y direction. Frame 560 can be attached to an actuator such as a gear which can move frame 560 and an attached chamber lid 512 between open and closed positions. FIGs. 9B and 9C are close-up views of the attachment of frame 560 to chamber lid 512, which has two receptacles 561, 562 for receiving fasteners. The receptacles 561, 562 can be threaded to receive screws. Frame 512 has apertures for fasteners to pass through and engage the receptacles 561, 562. The apertures can have one or more washers positioned above, below, or inside to provide a desired fit between the fasteners and the receptacles. For example, lid washers 563, 564 are positioned above the apertures, and lid shoulders 565, 566 are positioned inside and below the apertures. Lid shoulders 565, 566 have inside portions which can have substantially the same cross-section (e.g., diameter) as the apertures, or can have smaller cross-sections so that there can be slight movement. In FIG. 9B, the inside portion 567 of the front lid shoulder 565 has substantially the same cross-section as the aperture of the chamber lid 512, and in FIG. 9C, the inside portion 568 of the rear lid shoulder 566 has a smaller cross-section than the aperture. This approach allows chamber lid 512 to move slightly as it is lowered to chamber 501, which has been found to result in a better seal of the interior of the chamber 501. On a front portion of the chamber lid, approximately 3N pressure can be applied by lid frame to lid shoulder 565. The gap between lid washer 563 and the aperture of lid frame in the Z direction and the small lid shoulder diameter secures flexible connection in X and Y-direction. Thereby the chamber lid is adjusted to process bottom flange and effectively absorbs tolerances and ensures good sealing. On a rear portion of the chamber lid, a large gap in Y and Z direction ensures there are no load/forces in Y and Z direction. A small gap in X-direction between lid shoulder 566 and aperture of frame 560, positions the chamber lid around Z-axis.

The present methods and apparatus have various features which improve staining of samples in the CPM. The time, temperature, and/or concentration of reagents used for staining a sample on a slide can be shortened, reduced, or better controlled. The CPM can provide an easy way to agitate the reagent after it has been distributed, and avoids depletion of reagent and formation of bubbles that lack reaction in portions of the sample. The CPM can also provide improved control over humidity in the chamber, and/or create a closed compartment having high relative humidity (including up to 100% rH), while preventing condensation of fluid within the compartment. In some embodiments, the CPM includes a reservoir in the chamber floor, which allows better humidity control. Humidity can also be adjusted and selected through process control.

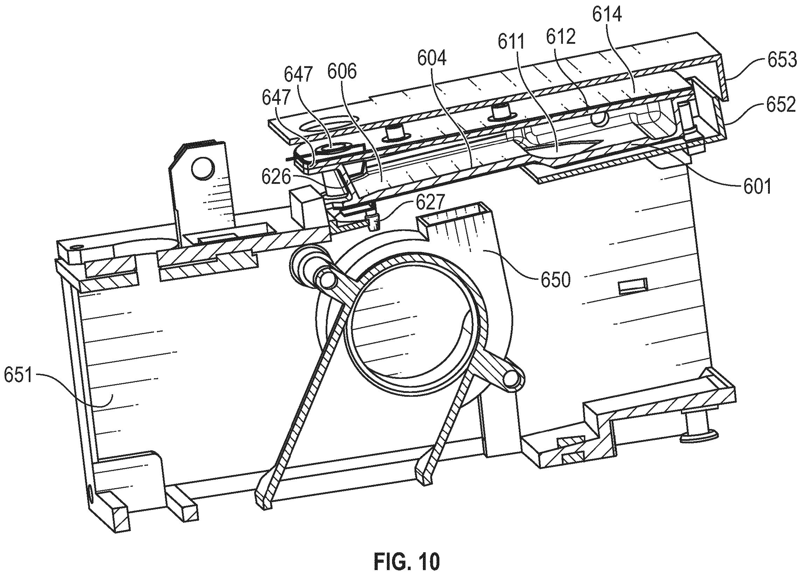

FIG. 10 illustrates a capillary processing module comprising a cooling device. To control staining and other processing, the present CPMs desirably have a reproducible, consistent temperature profile throughout the processing. This includes controlling temperature ramp up and cool down (the rate of temperate increases and decreases). In general, the time for ramping up the temperature and cooling down is reduced when the heat capacity of the CPM is reduced, such as by decreasing its mass. In some embodiments, a processing area of the CPM (e.g., a staining area) ramps up from 37.0°C to 95.0°C in ≤200s, or ≤150s, or ≤120s, and/or cools down from 97.0°C to 35.0°C in ≤900s, or ≤800s, or ≤700s. The ramp-up time is generally a function of heat capacity, heater power and losses to the ambient environment. The cool-down is generally a function of heat capacity and active cooling such as air flow or forced convection. The bottom of the CPM is cooled mainly by cold ambient air from a blower or other cooling device, and the chamber lid is cooled mainly by conduction to the bottom of the CPM.

In FIG. 10, the CPM comprises a chamber 601 having a chamber floor 604, an inclined floor 611, a chamber lid 612 and a heater 614 similar to those described for the CPM of FIG. 8A. The drain 626 allows fluid to be withdrawn from the chamber 601 and leads to a nozzle 627 which can be fitted with tubing. In FIG. 10, the chamber lid port 647 is open, but can be closed with a chamber lid plug. A blower 650 is disposed in a CPM housing 651, positioned to provide cooling air or other gas over chamber 601, preferably opposite to chamber floor 604. Frames can be positioned around the chamber to define a flow path for a cooling gas around the chamber 601. For instance, lower chamber frame 652 and upper chamber frame 653 are positioned to define a flow path for a cooling gas to travel from beneath the chamber 601 to the heater 614. This also facilitates a reproducible, consistent temperature profile around the chamber 601.

Temperature sensors can be placed on one or more of the chamber lid 612, the heater, the chamber floor 604, or other part of the CPM. As mentioned above, the present apparatus and methods may also comprise a temperature controller and/or CPM controller that receives temperature measurements from the temperature sensors, and operates the heating devices and/or cooling devices (e.g., the blower). The heating devices and/or cooling devices can be operated in an on / off manner, or in a faster / slower manner, so as to adjust the temperature of the CPM or a part thereof.

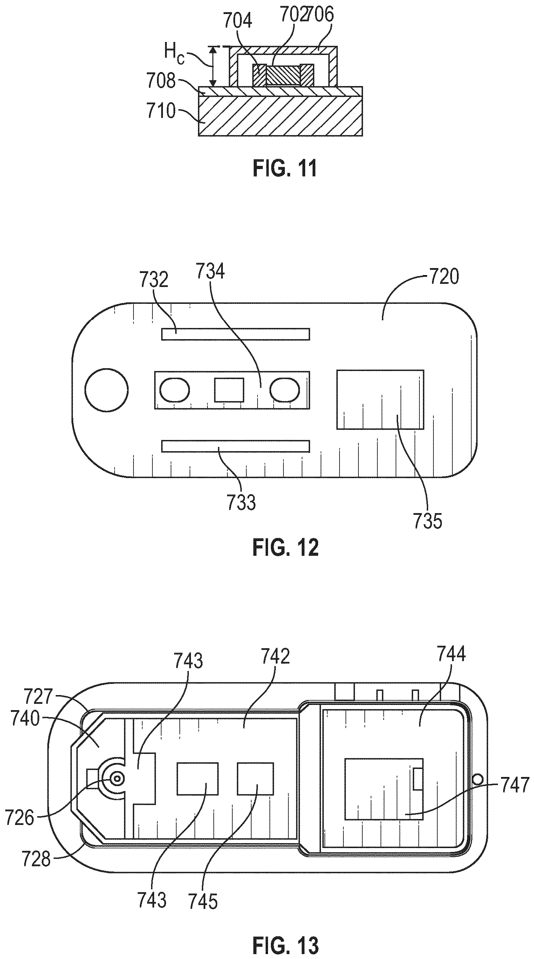

FIG. 11 illustrates an embodiment of a sensor for a chamber lid. Sensor 702 is in contact with a heater 708 on the surface of a chamber lid 710 via contacts 704. Sensor 702 can be enclosed by cover 706 which is separated from sensor 702 by a height HC.

The present apparatus and methods have an advantageous closed compartment design. Several features of the CPM contribute to the closed compartment design. For instance, some embodiments of the CPM are tight at crank bushings, as illustrated in FIG. 3B. Some embodiments of the CPM are configured to have a tight closure of the port, as illustrated in FIG. 8B. The CPM can be designed so that the port plug has planar overlap (in the X-Y plane) with the chamber lid. The port plug (either directly or through the plug arm attached to the port plug) can be spring loaded in the Z dimension to ensure tight contact with the port, and the port plug can also be configured so to have a floating suspension in the Z dimension, as illustrated in FIG. 8B. Some embodiments of the CPM are configured to have a tight contact of the chamber lid with the chamber. The CPM can be designed so that the chamber lid has planar overlap (in the X-Y plane) with the chamber. The chamber lid (either directly or through the frame attached to the chamber lid) can be spring loaded in the Z dimension to ensure tight contact with the chamber, and the chamber lid can also be configured so to have a floating suspension in the Z dimension, as illustrated in FIGs. 9A to 9C.

The present apparatus and methods have an advantageous thermal design. The present methods and apparatus reduce or minimize horizontal temperature gradients by heater power distribution, and when bottom and lid have same temperature there is no vertical gradient. In some embodiments, the processing area has a temperature gradient (at bottom) to be within ±0.5C. In some embodiments, condensation within the CPM is prevented by maintaining all internal surfaces of the CPM within ±2.0 degrees C of a selected temperature (e.g., 97.0 degrees C). Several features of the CPM which contribute to the advantageous thermal design, such as the cooling device and temperature sensor. The thermal design is also implemented by the design of heaters on the chamber lid and on the bottom of the chamber. In some embodiments, a CPM heater comprises a series of layers, at least one of which is a resistive heating element. For example the CPM heater may comprise a series of different layers to result in a UL approved heater for 150 degrees C. A bottom layer is adapted for adhering the heater to a surface of the chamber or the chamber lid. Exemplary materials for the bottom layer include acrylic PSA. A heat distribution layer such as an aluminium film can be disposed on the bottom layer, to receive heat from a resistive heating element and distribute it more evenly across the chamber surface. An insulation layer can be disposed between the heat distribution later and a heating element layer. The insulation layer should be electrically insulating while allowing heat to transfer with minimal losses. The heating element layer can comprise one or more heater tracks of a resistive heating element, such as a copper-nickel alloy which generates heat as an electric current is passed through. The size and material for the heater tracks can be tailored to have the conductivity needed, and heater tracks are designed to control power distribution to minimise horizontal gradient. A top layer can comprise an adhesive together with an insulating layer to protect the heater tracks. It is also contemplated that the CPM heater can comprise one or more additional layers as desired.

FIGs. 12 and 13 illustrate exemplary advantageous heater designs. FIG. 12 shows a design for the resistive heating elements in a CPM heater for a chamber lid. The design comprises a single heated zone 720 comprising heater tracks, and four unheated zones 732, 733, 734, 735 which do not have heater tracks. FIG. 13 shows a design for the resistive heating elements in a CPM heater for a chamber bottom. The design comprises three heated zones 740, 742, 744 comprising heater tracks. In some embodiments, the chamber lid heater has one heating zone which is designed for 24V 20W. It was found that unheated zones are advantageous in preventing hot spots when fixed track width and spacing is used, thereby reducing or avoiding thermal gradients in the X or Y directions of the chamber. In some embodiments, the heater tracks in the CPM heater have substantially identical widths. A sensor can be placed within a hot spot zone to limit overshoot during ramp up. This design also secures fast sensor responds to power application, i.e. load time constant seen by proportional-integral-derivative (PID) regulator is reduced.

In some embodiments, the chamber bottom heater has three heating zones, and each can be separately controlled. For instance, one heating zone can be positioned at a staining area and two heating zones can be positioned to compensate mounting losses, thereby enabling a low gradient across the staining area. In some embodiments, a heating zone 740 near the drain 726 of the CPM is designed for 24V 8.0W, which compensates conduction losses at mounting foot 727, 728 and runs high power density due to limited area available. A temperature sensor can be placed below a fluid inlet, and it can also be used detecting when a fluid is dispensed. For example, a temperature change of about 2°C or less may signal that a fluid has been dispensed. Use of temperature sensor(s) to determine if a liquid reagent has been properly dispensed or drained can be highly advantageous, in that it can avoid a need for additional flow meters or sensors. Temperature sensors to detect liquid drainage can be located at a drain or on a conduit through which liquid drains, either inside the conduit or on an outer surface of the conduit.

In the embodiment illustrated in FIG. 13, a center heating zone 742 is designed for example, for 24V 14.7W, and it covers a processing area in which a sample can be stained or subjected to other treatments. Unheated zones 743, 745 do not comprise heater tracks, and they are included to prevent unwanted hot spots, especially towards drain zone. A sensor (such as the sensor of FIG. 11) can be placed at or near the center of the processing area. Heating zone 744 near the crank and/or the label of a slide is designed for example, for 24V 17.3W, which compensates conduction losses at mounting points. Unheated zone 747 is asymmetric due to losses near crank drive. A sensor can be placed towards the humidity reservoir to control water evaporation. Wires can placed at cut outs and are away from sensors to prevent cooling sensor. However, heater track resistance sets a limit to how far away sensor wires can be moved.

The present methods and apparatus can produce a CPM with a closely-controlled temperature profile. For example, in some embodiments, the chamber space (more specifically, a processing area) can be heated to an inside temperature in the range of95.5-98°C, alternatively 95.8-97.8°C, alternatively 96.6-97.3°C.

The methods and apparatus also provide a closely-controlled temperature profile for the chamber lid, with an inside temperature in the range of, for example, 95.5-98°C, alternatively 95.8-97.8°C, alternatively 96.6-97.3°C. The ability to closely control the temperature profile of the chamber lid can serve several functions. For example, the chamber lid can be operated to collect liquid, thereby reducing humidity, by setting its temperature to allow condensation on the interior surface, thus enabling the chamber lid to act like a humidity reservoir. Alternatively, the chamber lid can be operated to prevent condensation on its interior surface by elevating temperature, so that liquid will not drip into the processing area, thereby diluting reagents.

The present methods and apparatus have heater designs which reduce or minimize thermal losses. In some embodiments the chamber bottom has plastic supports to reduce conduction losses at the mounting areas. In some embodiments, the CPM comprises an air guide that covers vertical sides and lower surface to reduce natural convection and radiation losses.

The present apparatus and methods have various process control features. The present methods can comprise one or more processing steps on a sample in addition to the step of raising or lowering the slide by operation of a crank. The processing steps can be performed before, during and/or after lowering the slide and spreading a fluid across the sample. Processing steps can also be performed before, during and/or after raising the slide and withdrawing a fluid from the sample.

In particular, the present apparatus and methods relate to processing, e.g. treating and/or staining, of at least one biological sample, e.g. a tissue section, on a slide as well as to the control of the fluid reagent and temperature during the processing. For instance, some embodiments of the present invention relate to the processing of a thin biological sample, e.g. a tissue section, using a small quantity of a processing fluid.

It is contemplated that the present methods and apparatus can perform one or more of the following processing steps on a sample: baking, dewaxing, target retrieval (TR), washing, cleaning, dehydrating, staining, hybridizing, digesting, denaturing, fixation (such as by alcohols or by crosslinking), enzymatic reactions (such as by horseradish peroxidase, alkaline phosphatase or like), precipitation or crosslinking reactions of tracers, chromogens, or fluorochromes, and others. For example, in some embodiments, the present methods can comprise one or more of the following processing steps: baking at 75°C ±2°C; dewaxing at 60°C ±2°C to dissolve paraffin or other embedding medium in a solvent, followed by washing with EtOH; TR at 97°C ±2°C, such as by TR by HIER in a TR buffer, following by washing with WB/DI; IHC at 37°C ±2°C, such as by contacting the sample with Envision Flex+: pAB, Block, Linker, HRP, DAB, followed by washing with WB; counter staining, such as by contacting the sample with DI, HTX, DI, WB; IF at 37°C ±2°C, such as by IF: pAB, and washing with WB. In some embodiments, the present methods can comprise one or more steps of a FISH assay, such as steps of Pepsin digestion 37°C ±2°C; Probe application and distribution at 37°C ±2°C; Denaturation by temperature, such as at 80°C ±2°C; hybridization by temperature, such as at 45°C ±2°C; and Stringent wash in SWB such as 61°C ±2°C. The foregoing steps may be part of processing steps preceded or followinged by washing with a wash buffer or water. In some embodiments, the present methods can comprise one or more steps of CISH assays at 37°C ±2°C, such as blocking of sample endogeneous enzymatic activity, incubation with enzyme conjugated antibodies, deposition of tracers or chromogens, visualization of tracers by chromogens and other relevant processing steps. Wash with WB; wash buffermounting at 37°C ±2°C, and dehydration in EtOH; and cleaning at 37°C ±2°C, with incubation in NaClO, and wash with WB. wash buffer or water

The present apparatus and methods may be used in the fields of cytology, histology, molecular pathology, biochemistry, immunology, microbiology, cell biology, molecular cytogenetics and immunohistochemistry, and accordingly, the methods can comprise one or more processing procedures employed in those fields. The present methods and apparatus can comprise one or more processes or fluids for processing biological samples in immunohistochemistry (IHC), in-situ hybridization (ISH), fluorescent in-situ hybridization (FISH), chromogenic in-situ hybridization (CISH), special stains (SS), silver in-situ hybridization (SISH), microarrays (tissue, protein, RNA, DNA, PNA, LNA, etc.) as well as other chemical and/or biological applications. The present methods can comprise processes such as deparaffinization, target retrieval, and staining, especially for in-situ hybridization (ISH) techniques. The present methods can comprise processes for examining a sample at a molecular level, including examination of the DNA, mRNA, miRNA, regulatory RNA, non-coding RNA and/or proteins that cause or are otherwise associated with disease. Such examination can be used for histological or cytological examination.

When used for staining or other processing of a sample on a slide, the present methods may comprise contacting the sample with a plurality of different fluid reagents or wash fluids. In some embodiments, the sample is subjected to processing processes in the CPM such as deparaffinization, washing, antigen retrieval, endogenous biotin or enzyme blocking, incubation with immunological reagents, molecular probes, secondary visualization reagents and various chromogen reagents, washing steps and counterstaining. The present methods can comprise raising a slide (more specifically, a portion of a slide such as a first end) by rotating a crank; applying a first fluid reagent; lowering the slide by rotating the crank, thereby spreading the first fluid reagent across a processing area of the slide; raising the slide by rotating the crank, thereby withdrawing the first fluid reagent; and removing the first fluid reagent from the processing area. In some embodiments, the slide is lowered and raised one or more additional times in order to mix or agitate the first fluid reagent. In some embodiments, a second fluid reagent is applied after the first fluid reagent is removed. The present methods can comprise raising a slide by rotating a crank before applying the second fluid reagent; lowering the slide by rotating the crank, thereby spreading the second fluid reagent across a processing area of the slide; raising the slide by rotating the crank, thereby withdrawing the second fluid reagent; and removing the second fluid reagent from the processing area. Likewise, the foregoing processes can be performed with a third fluid reagent, a fourth fluid reagent, and so on, up to ten, twelve, or any other desired number of fluid reagents. Moreover, the foregoing processes can be performed with one or more wash fluids in place of the fluid reagent.

In some protocols for processing a sample, such as ISH, the sample is to be dehydrated before processing continues, such as by staining the sample. To obtain efficient drying or dehydrating of the sample, the capillary gap can be removed or broken such that an efficient evaporation can take place, the lid can be raised to increase the air volume for evaporation further and the methods can comprise raising the slide for a time sufficient for dehydrating or drying.

The present apparatus and methods are generally suitable for any slide, though it is contemplated that the size and shape of a chamber can be selected for slides of a standard size. Exemplary slides include glass slides, DakoFlex and SuperFrostPlus with typical dimension 25mm x 75mm. In some embodiments, a slide can include a label portion, and the label portion can be is positioned over axis of the shaft. The label portion and/or bent portion can have surface characteristics or shapes that facilitate their engagement. For instance, label portion can have a surface coating which is different from the surface of the sample portion of the slide. The surface coating can be adapted to increase or decrease friction between label portion and bent portion.

The present apparatus and methods can comprise or be included within a tissue staining apparatus comprising other components and features. By way of example, a tissue staining apparatus can comprise a CPM as described herein which is connected (directly or indirectly) to one or more of a controller, a pipettor for dispensing fluids, a robotic arm for grasping and moving a slide, reagent vials, and apparatus for storing and/or moving the reagent vials. The tissue staining apparatus can include one or more controllers configured or programmed for operation of the crank, the chamber lid, the pump, the heater(s), the cooling device(s), and/or other features of the CPM. The controllers can comprise hardware, software, or a combination of hardware and software for operation of the components of the system. The controllers can comprise, or can be configured to receive and implement, one or more software programs for processing a slide comprising a sample, such as a program with a slide staining procedure. The present tissue staining apparatus can also comprise reagent vials, apparatus for storing reagent vials, and/or apparatus for providing one or more reagent vials for use by a pipettor. Connections between the CPM and other components may be physical connections, fluidic connections (such as through a conduit), electrical connections, informational connections (such as through wireless transmission of signals), and combinations thereof.

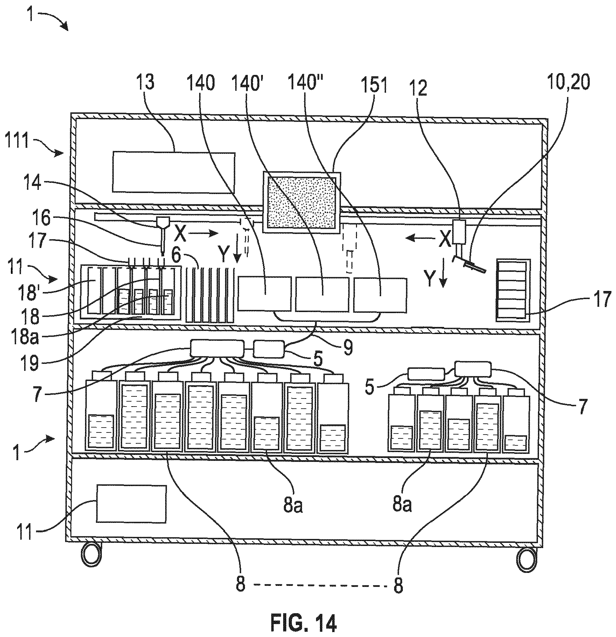

FIG. 14 schematically illustrates an embodiment of an automated tissue staining apparatus 1 comprising various components and features. The automated tissue staining apparatus 1 comprises a first capillary staining module 140, a second capillary staining module 140', and a third capillary staining module 140", but it should be understood that the number of capillary staining modules can be varied. In some embodiments, the first, second, and third capillary staining modules, 140, 140', and 140" may be configured for, for example, immunohistochemical (IHC) applications, and in-situ hybridisation (ISH) applications.

The staining apparatus 1 may comprise three levels; a first, lower, level I comprising, for example, e.g. bulk fluid containers, waste, valves and pumps; a second, middle, level II comprising e.g. a number of processing units, slide storages, robotics and reagent vials; and a third, upper, level III comprising e.g. a cover slipper and control units and communication interfaces. Certain elements such as control unit 151 may be positionable to level III to roughly enable an eye-level view of the display, or to level I to be out of the way when manually accessing the modules in level II.

As illustrated, the automated staining apparatus 1 may comprise one or more processing units, such slide storage units 6 and one or more capillary staining modules 140, 140', 140".

Automated staining apparatus 1 may include sample loading stations 17 for inserting slide baskets with samples into the apparatus for processing.

One or more slide storage units 6 are configured to store one or more slides 10 arranged on one or more slide baskets 20 configured to hold a number of slides 10 mounted side by side. The slide storage units 6 are configured to store slides horizontally, vertically, or in another suitable position.

The automated staining apparatus 1 may further comprise a number of containers 8 of bulk fluids 8a, such as washing solutions, buffer solutions, deparaffinization solutions, target retrieval solutions or aqueous solutions, such as purified water, antibodies in solution, bulk staining solutions such as hematoxylin, eosin, cleaning solutions such as DAB removing solution, etc. known to a person skilled in the art.

The automated staining apparatus 1 may further comprise tubings 9 connecting the bulk fluid container(s) 8 to one or more processing units 2, 140, 140', 140", valves 7 for controlling the flow of bulk fluid 8a to the one or more processing units 2, 140, 140', 140", from the bulk fluid container(s) 8, and one or more pumps 5 configured to provide a flow of bulk fluid from the bulk fluid container 8 to the one or more processing units 2, 140, 140', 140".

Further, the automated staining apparatus 1 may comprise a waste container 11 configured to store waste fluid which has been removed by tubings (not shown) from the one or more processing units 2, 140, 140', 140".

As schematically illustrated in FIG. 14, the automated staining apparatus 1 comprises further a slide robot 12 configured to transport one or more slides 10 or one or more slide baskets 20 in X and Y (as well as Z) direction as indicated by the arrows X and Y. By a slide robot 12, the slides/slide rack may be transported between different processing units 2, 140, 140', 140" and storages 6 of the staining apparatus 100 so that the biological samples arranged on the slides can be processed as desired.

In FIG. 14, it is schematically illustrated how the slide robot 12 lifts, along the Y direction, a slide 10 from a slide storage 6. Further, as indicated by the arrow, the slide robot 12 can move to the left, along the X direction, to for example a first capillary staining module 140, 140', 140".

Slide robot 12 may grab a slide 10 from sample drawer 17 and transport the slide rack 20 and slides 10 to any of the stations such as staining modules 140, 140', 140", or wet/dry unload modules 6 in order to process the samples upon the slides 10.

When the slide robot 12 is arranged at a position above the slide position of the capillary staining module, the slide robot 12 can be configured to lower, along the Y direction, the slide into the capillary staining module to insert the slide in a correct position within the capillary staining module, as indicated by the downwards directed arrow along the Y direction in FIG. 14.

Further, slide robot 12 may be configured to position slide 10 horizontally, vertically or at an angle between horizontal and vertical. For example, slide robot 20 may grasp or release slide 10 in a horizontal orientation from loading stations 17. As a further example, slide robot 12 may grasp or release slide 10 in a vertical orientation at pretreatment modules 2 or unloading stations 6. In yet another example slide robot 12 may grasp or release slide 10 in an angled orientation between horizontal and vertical such as staining modules 140, 140' and 140".

Furthermore, the automated staining apparatus 1 comprises a fluid robot 14 for moving a probe 16 in X and Y (as well as Z) direction as indicated by the arrows X and Y. The fluid robot 14 may position the probe 16 above one or more fluid containers 18, mixing stations, capillary staining modules 140, 140', 140".

The fluid robot 14 may further operate the probe 16 to aspirate portions of reagent 18a contained in any of the reagent containers 18, to transfer the portion of reagent 18a and apply it to one or more slides 10 arranged in one or more of the capillary staining modules 140, 140', 140" in order to provide a selected staining or treatment of the sample on the slide. As schematically illustrated in FIG. 14, one or more fluid containers 18 can be arranged in a fluid container rack 19.

Thus, the fluid robot 14 is configured to move the probe 16 between different positions within the automated staining apparatus 1. The fluid robot 14 may for example be configured to move the probe 16 to e.g. an aspiration position at a reagent container 18 and to let the probe 16 aspirate an amount of a reagent 18a from the reagent container 18. Further, as schematically illustrated by the leftward directed arrow, along the X direction, and the downward directed arrow, along the Y direction, by fluid robot 14, the probe 16 can be moved to e.g. a dispensing position at a slide 10 arranged in a capillary staining module 140, 140', 140", at which dispensing position, a volume of the aspirated reagent 18a can be dispensed to the slide 10 in order to provide a selected staining or treatment of the sample on the slide.

Further, the capillary chamber as described herein may be used in conjunction with fluid dispensing mechanisms including robotic pipettes, probes, tubes, direct dispensing bottles, manifolds, and so forth.

Before aspirating an amount of a possible different second fluid, the probe 16 can be moved to a washing fluid container 18' and an amount of the washing fluid can be aspirated in order to clean the probe 16 before an amount of a possible new fluid is aspirated by the probe 16.

As schematically illustrated in FIG. 14, the one or more reagent containers 18, 18' can be arranged in a reagent container rack 19. A plurality of reagent container racks may be configured to be independently insertable and or removable in order to accommodate continuous workflow, i.e. adding or removing reagents during ongoing processing of slides.

Further, the automated staining apparatus 1, may further comprise a cover slipper 13 configured to arrange a cover glass (not shown) on a processed biological sample arranged on a slide 10.

As schematically illustrated in FIG. 14, the automated staining apparatus 1 may also comprise a control unit 151 comprising processing control and an input/output interface. A suitable input can be a keyboard and a suitable output can be a monitor or control unit 151 may comprise a touch screen display.

### EXEMPLARY EMBODIMENTS

Exemplary embodiments provided in accordance with the presently disclosed subject matter include, but are not limited to, the following:
Embodiment 1. A method for processing a biological sample on a slide, comprising: placing a slide in a capillary processing module, wherein the capillary processing module comprises a chamber having a chamber floor and a crank positioned to raise and lower a portion of the slide with respect to the chamber floor; and rotating the crank to raise or lower a portion of the slide, wherein a capillary gap is formed between the chamber floor and the slide when the slide is at a lowered position.
Embodiment 2. The method of embodiment 1, wherein the crank raises or lowers a first end of the slide, while a second end of the slide remains on the chamber floor or on a slide support disposed on the chamber floor.
Embodiment 3. The method of embodiment 1 or embodiment 2, wherein the first end of the slide is raised so that a surface of the slide and the chamber floor form an angle between about 0.1 degrees and about 25 degrees.
Embodiment 4. The method of any of embodiments 1 to 3, further comprising: supplying an amount of a first fluid to the chamber floor; spreading the first fluid over a processing area of the slide by capillary force; and raising the slide by rotating the crank, wherein the first fluid is withdrawn from the processing area due to the raising of the slide.
Embodiment 5. The method of embodiment 4, further comprising supplying about 2000 µL or less of the first fluid.
Embodiment 6. The method of embodiment 4, further comprising repeatedly raising and lowering the slide by rotating the crank, so that the first fluid is withdrawn and spread, such as to mix the fluid, prevent local depletion of a reagent, and/or move or remove bubbles.
Embodiment 7. The method of embodiment 4, further comprising removing the first fluid from the CPM through a drain by raising and/or lowering the slide by rotating the crank, and actuating a mechanism to provide a suction at the drain.
Embodiment 8. The method of embodiment 7, wherein the slide is lowered before completing the removal of the first fluid through the drain.
Embodiment 9. The method of any of embodiments 1 to 8, wherein the slide has first and second major slide surfaces, and a sample is attached to the first major slide surface, and the method further comprises inserting the slide into the chamber such that the first major slide surface having the sample faces the chamber floor.
Embodiment 10. The method of any of embodiments 1 to 9, further comprising forming a capillary gap between the chamber floor and the slide by rotating the crank to lower the slide.
Embodiment 11. A capillary processing module comprising: a chamber comprising a chamber floor and one or more chamber sidewalls, and a crank positioned to raise and lower a portion of a slide when rotated.
Embodiment 12. The capillary processing module of embodiment 11, wherein the crank extends from the one or more chamber sidewalls and does not extend through the chamber floor.
Embodiment 13. The capillary processing module of embodiment 11 or embodiment 12, wherein the crank comprises a bent portion positioned to engage and disengage the slide when the crank is rotated.
Embodiment 14. The capillary processing module of any of embodiments 11 to 13, wherein the crank comprises an asymmetric portion positioned to engage and disengage the slide when the crank is rotated.
Embodiment 15. The capillary processing module of embodiment 14, wherein the crank comprises a drive end that engages a gear, and one or more springs are positioned to apply a force from the gear to the drive end so that the chamber is sealed from a surrounding environment.
Embodiment 16. The capillary processing module of any of embodiments 11 to 15, further comprising a cooling device positioned below the chamber floor outside the chamber.
Embodiment 17. The capillary processing module of any of embodiments 11 to 16, further comprising a drain in the chamber, and a drain mechanism fluidly connected to the drain.
Embodiment 18. The capillary processing module of embodiment 17, wherein the capillary processing module is adapted to minimize residual fluid in the chamber after draining.
Embodiment 19. The capillary processing module of embodiment 17, further comprising a barrier surrounding a portion the drain.
Embodiment 20. The capillary processing module of embodiment 19, wherein the barrier surrounds a front portion the drain so that an opening of the barrier allows entrance to the drain when the slide is in a lowered position.
Embodiment 21. The capillary processing module of any of embodiments 11 to 20, further comprising a chamber lid movably connected to chamber wherein the chamber lid is movable between open and closed positions.
Embodiment 22. The capillary processing module of embodiment 21, further comprising a fluid port on the chamber lid, and a port plug configured to seal the port.
Embodiment 23. The capillary processing module of any of embodiments 20 to 22, where in the chamber lid is attached to a frame configured to move the chamber lid between open and closed positions.
Embodiment 24. The capillary processing module of embodiment 23, wherein the chamber lid is attached to the frame by a plurality of fasteners positioned along a long axis of the chamber lid, and the frame moves the chamber lid in angular motion around a short axis of the chamber lid, and the fastener closer to the axis of the angular motion attaches the frame to the chamber lid while allowing a limited amount of movement.
Embodiment 25. The capillary processing module of embodiment 24, wherein the CPM has one or more washers in apertures of the frame, wherein the rear washer comprises an inside portion having a smaller cross-section than the aperture.
Embodiment 26. The capillary processing module of embodiment 22, wherein the port plug is a resilient material.
Embodiment 27. The capillary processing module of embodiment 22 or embodiment 26, further comprising a plug arm having port plug at an end, where the plug arm is configured to move the port plug on and off the port.
Embodiment 28. The capillary processing module of any of embodiments 11 to 27, further comprising a heater on the chamber and/or the chamber lid.
Embodiment 29. The capillary processing module of any of embodiments 11 to 28, wherein the capillary processing module is adapted to provide control over humidity in the chamber and/or create a closed compartment having a relative humidity up to 100%.
Embodiment 30. The capillary processing module of embodiment 29, wherein the heater comprises heater tracks made of a resistive heating material.
Embodiment 31. The capillary processing module of embodiment 29, wherein the heater tracks are positioned to define one or more heated zones and one or more unheated zones.
Embodiment 32. The capillary processing module of any of embodiments 29 to 31, further comprising a temperature sensor on the heater.
Embodiment 33. The capillary processing module of embodiment 32, further comprising a controller configured to receive a temperature measurement from the temperature sensor and to adjust the heater or a cooling device based on the temperature measurement.
Embodiment 34. The capillary processing module of any of embodiments 11 to 33, wherein the CPM comprises an inlet in the one or more chamber sidewalls.
Embodiment 35. The capillary processing module of any of embodiments 11 to 34, wherein the one or more chamber sidewalls are joined to the chamber floor by a curved corner.
Embodiment 36. The capillary processing module of any of embodiments 11 to 35, wherein the chamber has first and second recesses separated by the processing area, where the first recess has a shaft of the crank disposed therein, and the second recess has a drain disposed therein.
Embodiment 37. The capillary processing module of any of embodiments 11 to 36, wherein the capillary processing module comprises one or more features to keep liquid below a slide within the chamber and to prevent liquid wicking away from slide.
Embodiment 38. The capillary processing module of any of embodiments 11 to 37, wherein the chamber is formed from surface hardened stainless steel.
Embodiment 39. The capillary processing module of any of embodiments 11 to 38, wherein the chamber comprises one or more surfaces formed from stainless steel alloy SMO254.
Embodiment 40. The capillary processing module of any of embodiments 11 to 39, wherein the chamber comprises one or more surfaces hardened by Kolesterising.
Embodiment 41. The capillary processing module of any of embodiments 11 to 40, wherein the chamber comprises one or more surfaces having an inert, corrosion resistant coating.
Embodiment 42. The capillary processing module of any of embodiments 11 to 41, wherein the chamber comprises one or more surfaces coated with a barrier of amorphous silicon, oxygen and carbon.
Embodiment 43. A tissue staining apparatus comprising a capillary processing module, said capillary processing module comprising a chamber adapted to receive a slide having a tissue sample thereon and a crank adapted to raise and lower a portion of said slide when said crank is rotated such that a capillary gap is formed between said slide and a floor of said chamber when said slide is in a fully lowered position.
Embodiment 44. The tissue staining apparatus of embodiment 43, wherein the capillary processing module is adapted to allow removal of a slide.
Embodiment 45. The tissue staining apparatus of embodiment 43 or embodiment 44, further comprising one or more controllers connected to the capillary processing module.
Embodiment 46. The tissue staining apparatus of embodiment 45, wherein the one or more controllers are configured or programmed for operation of the crank, a chamber lid, a pump, one or more heaters, and/or a cooling device.
Embodiment 47. The tissue staining apparatus of embodiment 45 or 46, wherein the one or more controllers comprise, or are configured to receive and implement, one or more software programs for processing a slide with a slide staining protocol.
Embodiment 48. The tissue staining apparatus of any of embodiments 43 to 47, further comprising a pipettor for dispensing fluids.
Embodiment 49. The tissue staining apparatus of embodiment 48, wherein the capillary processing module comprises an inlet in one or more chamber sidewalls, wherein the inlet is adapted for receiving fluid from the pipettor.
Embodiment 50. The tissue staining apparatus of embodiment 49, wherein the one or more chamber sidewalls are joined to the chamber floor by a curved corner.
Embodiment 51. The tissue staining apparatus of any of embodiments 43 to 50, further comprising a robotic arm for grasping and moving a slide.
Embodiment 52. The tissue staining apparatus of any of embodiments 43 to 51, wherein the tissue staining apparatus further comprises one or more reagent vials.
Embodiment 53. The tissue staining apparatus of any of embodiments 43 to 52, wherein the tissue staining apparatus further comprises an apparatus for storing and/or moving the reagent vials.
Embodiment 54. A tissue staining apparatus comprising a capillary processing module according to any one of embodiments 11 to 42.

It is to be understood that the terminology used herein is for purposes of describing particular embodiments only, and is not intended to be limiting. The defined terms are in addition to the technical and scientific meanings of the defined terms as commonly understood and accepted in the technical field of the present teachings.

In view of this disclosure it is noted that the methods and apparatus can be implemented in keeping with the present teachings. Further, the various components, materials, structures and parameters are included by way of illustration and example only and not in any limiting sense. In view of this disclosure, the present teachings can be implemented in other applications and components, materials, structures and equipment, while remaining within the scope of the appended claims.

## Claims

1. A capillary processing module comprising:
a chamber comprising a chamber floor and one or more chamber sidewalls,
a crank positioned to raise and lower a portion of a slide when rotated,
a chamber inlet through which fluids are introduced to the chamber, and
a temperature sensor placed below the inlet.

2. The capillary processing module of claim 1, further comprising:
a drain in the chamber, and
a second temperature sensor to detect liquid drainage.

3. The capillary processing module of claim 2, wherein the second temperature sensor is located at the drain.

4. The capillary processing module of claim 2, further comprising:
a conduit through which liquid drains, wherein
the second temperature sensor is located on the conduit.

5. The capillary processing module of claim 4, wherein the drain leads to a nozzle which can be fitted with the conduit.

6. The capillary processing module of any of claims 2 to 5, further comprising a drain mechanism fluidly connected to the drain or the conduit.

7. The capillary processing module of any one of claims 1 to 6, wherein the capillary processing module comprises the inlet in the one or more chamber sidewalls.

8. The capillary processing module of any one of claims 1 to 6, further comprising
a chamber lid movably connected to chamber wherein the chamber lid is movable between open and closed positions, and wherein
the inlet is a fluid port on the chamber lid, and optionally further comprising a port plug configured to seal the port.

9. A tissue staining apparatus comprising the capillary processing module of any one of claims 1 to 8.

10. The capillary processing module of any one of claims 1 to 8 or the tissue staining apparatus of claim 9, further comprising a controller that receives temperature measurements from the temperature sensors.

11. The capillary processing module or the tissue staining apparatus of claim 10, wherein the controller comprises software configured to implement detecting when a fluid is dispensed into the capillary processing module by measuring a temperature change with the temperature sensor placed below the inlet.

12. The capillary processing module or the tissue staining apparatus of claim 11, wherein a temperature change of 2°C signals that a fluid has been dispensed.

13. The capillary processing or the tissue staining apparatus of claim 10, wherein the controller comprises software configured to implement detecting liquid drainage from the capillary processing module of by measuring a temperature change with the second temperature sensor.
